# FASCICULE DE BREVET EUROPEEN

(11) **EP 0 936 201 B1**
(45) Date de publication et mention de la délivrance du brevet: **20.08.2003**
(21) Numéro de dépôt: 99400294.7
(22) Date de dépôt: 09.02.1999
(51) Int. Cl.: C04B 24/10, C04B 28/14, C08B 31/18, C07H 3/00

(54) **Adjuvants pour liants minéraux, à base de sucre (oxydé) et de sucre hydrogéné, liants minéraux adjuvantés et leur procédé de préparation**
Zusatzmittel für anorganische Bindemittel auf Basis von (oxidiertem) Zucker und hydrogeniertem Zucker, diese Zusatzmittel enthaltende anorganische Bindemittel und Verfahren zu ihrer Herstellung
Admixtures for inorganic binders based on (oxidised) sugar and hydrogenated sugar, inorganic binders containing these admixtures and process for their preparation

(30) Priorité: 11.02.1998 FR 9801643
(43) Date de publication de la demande: 18.08.1999
(73) Titulaire: Roquette Frères, 62136 Lestrem (FR)
(72) Inventeur: Mentink, Léon, 59800 Lille (FR); Graux, Jean-Pierre, 62190 Lillers (FR)
(74) Mandataire: Boulinguiez, Didier

(56) Documents cités:
- EP-A- 0 497 706
- EP-A- 0 609 983
- EP-A- 0 650 941
- DE-A- 2 707 677
- DE-A- 2 708 968
- GB-A- 2 293 821
- DATABASE WPI Section Ch, Week 8039 Derwent Publications Ltd., London, GB; Class A11, AN 80-68553C XP002080473 & JP 55 104957 A (KAO SOAP CO LTD), 11 août 1980 (1980-08-11)
- PATENT ABSTRACTS OF JAPAN vol. 097, no. 006, 30 juin 1997 (1997-06-30) & JP 09 040447 A (KAO CORP), 10 février 1997 (1997-02-10)

## Description

La présente invention a pour objet des adjuvants pour les liants minéraux, à base d'au moins un sucre ou un sucre oxydé et d'au moins un sucre hydrogéné. Elle a également pour objet les liants minéraux adjuvantés ainsi que leur procédé de préparation.

Par "liant minéral", on entend tout liant hydraulique, notamment toute poudre minérale, apte à former avec l'eau une pâte faisant prise et durcissant progressivement, même à l'abri de l'air. Classiquement, à température ambiante, un liant minéral commence à former avec l'eau une telle pâte dans un délai d'environ quelques minutes à moins de 48 heures, généralement entre environ 30 minutes et 24 heures. Cette définition s'applique, entre autres, aux ciments, aux chaux hydrauliques naturelles ou artificielles, aux mélanges tels que mortiers, coulis, enduits et bétons, à base de ciment broyé et/ou de chaux, d'eau et/ou de granulats (sables, graviers, cailloux, ...), aux matières premières entrant dans la fabrication des ciments tels que pouzzolanes, clinkers, laitiers, fillers calcaires et fumées de silice. Par "liant minéral", on entend aussi tout liant non hydraulique à base de sulfate de calcium, de gypse et/ou de chaux.

En fonction de leurs utilisation finale et conditions d'usage, il est parfois nécessaire d'ajouter aux liants minéraux des adjuvants tels que les agents de mouture ou auxiliaires de broyage, les plastifiants, les réducteurs d'eau-plastifiants et les super plastifiants. Ces adjuvants permettent par exemple de modifier la maniabilité, la prise, le durcissement, la résistance, la durabilité et/ou certaines autres propriétés du liant minéral.

De nombreux produits plastifiants-réducteurs d'eau ou super-plastifiants sont déjà utilisés, dont :
- les mélasses, qui sont des produits peu coûteux, fermentescibles et d'une efficacité limitée ;
- les lignosulfonates bruts, peu coûteux, mais qui provoquent un moussage des mortiers ou des bétons diminuant ainsi leur résistance à 28 jours ;
- les sucres, qui sont de bons plastifiants réducteurs d'eau mais fortement retardateurs de prise ;
- les sucres oxydés, très bons plastifiants réducteurs d'eau, retardateurs de prise, et qui permettent également d'améliorer la résistance à 28 jours comme décrit dans les brevets FR N° 2 387 194 et GB N° 1 508 761 ;
- les condensats de naphtalène formaldéhyde sulfonés ou de mélamine formaldéhyde sulfonés, qui sont de très bons plastifiants, peu retardateurs de prise mais qui n'apportent cependant pas d'amélioration de la résistance à 28 jours et qui sont peu écologiques ;
- les polyacrylates qui sont des super-plastifiants faiblement retardateurs de prise qui n'améliorent cependant pas ou peu la résistance à 28 jours ;
- les sucres hydrogénés, qui sont des plastifiants-réducteurs d'eau, comme décrit dans le brevet FR 2 726 550, mais qui sont cependant nettement moins retardateurs que les sucres oxydés tout en améliorant la résistance à 28 jours, comme il résulte du brevet américan US N° 4 073 658 ; les sirops de sucre hydrogénés sont également décrits comme agent de mouture, comme les sirops de glucose oxydés, selon le brevet EP N° 0 695 557 ;
- des copolymères du styrène et de l'anhydride maléique qui sont à la fois des superplastifiants et des agents de mouture comme il résulte du brevet FR N° 2 744 714.

Actuellement, pour la préparation des ciments, la tendance est à utiliser des produits moins chers que le clinker. Cependant, le clinker confère une bonne résistance à 28 jours. Il existe donc un besoin en un adjuvant permettant de corriger la résistance à 28 jours de ciments ne contenant pas ou contenant peu de clinker.

Par ailleurs, en ce qui concerne les mortiers, coulis et bétons, l'industrie est à la recherche de plastifiants et de réducteurs d'eau ou de super-plastifiants qui soient écologiques et qui confèrent à la fois une très bonne plasticité avec peu de retard de prise, des résistances au jeune âge, i.e. entre 8 et 24 heures, suffisantes pour permettre des décoffrages rapides et des résistances à 28 jours si possible améliorées.

Les sucres (oxydés, hydrogénés) sont des produits biodégradables, issus de matières renouvelables. Ils présentent cependant un certain nombre d'inconvénients.

Les sucres (oxydés) confèrent généralement des retards de prise importants générant des résistances mécaniques au jeune âge extrêmement faibles, ne permettant pas d'ordinaire un décoffrage du liant minéral. Les sucres hydrogénés, moins plastifiants et moins retardateurs, sont eux très sensibles à la nature et à la composition des liants minéraux. Leur efficacité dépend notamment de la nature et de la composition du ciment utilisé. Il convient donc souvent de ré-ajuster leurs dosages d'une préparation de liant minéral à l'autre. En outre et comme l'a constaté la Demanderesse, un sucre hydrogéné tel que le sorbitol donne lieu à des phénomènes de "fausse prise".

De plus, les sucres et sucres hydrogénés jouent, dans certains cas, une fonction d'agents viscosifiants comme il résulte de la demande de brevet WO 97/27152.

Il existe donc un besoin en un adjuvant écologique, permettant d'obtenir un bon compromis entre le retard de prise, la plasticité, la résistance mécanique au jeune âge et la résistance mécanique à 28 jours.

Dans le cadre de la présente invention, on entend par plasticité du liant minéral la capacité d'obtenir un état rhéologique dans lequel le liant minéral est manipulable, coulable ou pompable. La mesure de la plasticité est effectuée selon la méthode normalisée CEN 196-01 par laquelle on mesure, en mm, l'étalement d'un volume donné de liant minéral sur une table à chocs.

Le début et la fin de prise sont mesurés à l'aide d'un prisomètre automatique de marque "ACMEL". La résistance mécanique au jeune âge est mesurée sur une éprouvette de liant minéral selon la norme CEN 196-01 précitée et ce, 17 ou 24 heures après la fabrication de l'éprouvette. Cette résistance mécanique au jeune âge doit, en général, être supérieure à 5 MPa pour permettre un décoffrage. Par ailleurs, la résistance à 48 heures, à 14 ou 28 jours des liants minéraux est également mesurée selon la norme précitée CEN 196-01.

La Société Déposante a eu le mérite de trouver, après de nombreuses recherches, qu'un adjuvant répondant aux exigences précitées de la technique actuelle, pouvait consister en une composition particulière contenant des pourcentages sélectionnés en, respectivement, au moins un sucre ou un sucre oxydé et au moins un sucre hydrogéné.

La présente invention a donc pour objet l'utilisation comme adjuvant pour liants minéraux d'une composition contenant :
- (A) de 1 à 99 %, de préférence de 3 à 75 %, et plus préférentiellement encore de 5 à 60 %, en poids, d'un sucre ou d'un sucre oxydé, et
- (B) de 99 à 1 %, de préférence de 97 à 25 %, et plus préférentiellement encore de 95 à 40 %, en poids, d'un sucre hydrogéné, ces pourcentages étant exprimés en poids sec par rapport au poids total de sucre ou de sucre oxydé et de sucre hydrogéné contenu dans ladite composition.

Il a notamment été constaté, de manière surprenante et inattendue, que la substitution d'une partie du sucre (oxydé) par un sucre hydrogéné permettait de réduire le retard de prise, et par là même d'augmenter la résistance au jeune âge et ce, d'une manière beaucoup plus conséquente que ce qui était prévisible en tenant compte des quantités respectives de sucre (oxydé) et de sucre hydrogéné contenus dans l'adjuvant. Des effets de synergie ont pu être également mis en évidence pour les résistances à 48 heures, à 14 jours et/ou à 28 jours.

Ceci est d'autant plus surprenant qu'il a été décrit dans le brevet FR 2 568 245 des effets de synergie totalement contraires entre d'une part un sucre oxydé comme l'acide gluconique et d'autre part un sucre hydrogéné comme le sorbitol. L'exemple 1 et la figure 1 dudit brevet montrent que dans une composition particulière, à savoir une composition de prévention de la rouille à base de ciment Portland, de latex, d'acide gluconique et de sorbitol utilisée comme bain de trempage d'armatures d'acier destinées à renforcer un béton, l'association entre le sucre oxydé et le sucre hydrogéné crée un effet de synergie en termes d'augmentation du retard de prise. Cet effet est d'ailleurs tellement important que ladite composition ne fait pas prise même après 12 jours et peut être réutilisée sous forme de bain pendant un temps indéfini (de 2 à 110 jours). Il s'ensuit qu'une telle composition, laquelle reste indéfiniment liquide à température ambiante, ne peut être qualifiée de "liant minéral" au sens de la présente invention.

Rien ne laissait donc soupçonner les effets de synergie mis en évidence par la Demanderesse entre sucre (oxydé) et sucre hydrogéné.

Dans le cadre de la présente invention, on entend notamment par "sucre", les monosaccharides, disaccharides, trisaccharides, oligosaccharides et polysaccharides, linéaires, cycliques ou branchés, ainsi que les mélanges de ces produits tels que les hydrolysats d'amidon ou d'inuline. De manière avantageuse le sucre est choisi dans le groupe comprenant le glucose, le fructose, le xylose, l'arabinose, le lactose, le maltose, le maltotriose, les dextrines, les hydrolysats d'amidon, ces derniers étant préférés, et les mélanges quelconques de ces produits. Le sucre peut se présenter sous une forme solide, cristallisée ou non, pâteuse ou liquide. La matière sèche de ces formes de présentation ne constitue pas un paramètre limitatif dans le cadre de l'invention.

On entend notamment par "sucre oxydé" l'ensemble des produits résultant de l'oxydation, au moins partielle, de quelque manière que ce soit, en une ou plusieurs étapes, en un ou plusieurs endroits, des sucres précités. Il s'agit en particulier des produits d'oxydation du glucose, du xylose, de l'arabinose, du lactose, du maltose, du maltotriose, des hydrolysats d'amidon, et des mélanges quelconques de ces sucres.

Par "produit d'oxydation d'un sucre", on entend aussi bien l'ensemble des monoacides et des polyacides susceptibles d'être obtenus à partir d'un sucre (par exemple les acides gluconique, 2-cétogluconique, glucarique et glucuronique obtenus à partir de glucose, l'acide maltobionique obtenu à partir du maltose) que les sels correspondants auxdits acides, dont notamment les sels de métaux alcalins et alcalino-terreux. Par "sucre oxydé" au sens de la présente invention, on entend également les dérivés des produits susmentionnés tels que les acides érythorbique, méthyl 2-céto gluconique et ascorbique et leurs sels correspondants.

L'oxydation d'un sucre peut être menée selon les variantes décrites au niveau des brevets EP 232 202, EP 233 816, WO 97/20860, FR 2 742 755 et EP 780 399 au nom de la Demanderesse. Le sucre oxydé est choisi de préférence dans le groupe comprenant l'acide gluconique, l'acide glucarique, l'acide xylonique, l'acide arabinonique, l'acide lactobionique, l'acide maltobionique, l'acide érythorbique, les hydrolysats d'amidon oxydés, leurs sels respectifs et les mélanges quelconques de ces produits.

Dans le cadre de la présente invention, on entend notamment par "sucre hydrogéné" l'ensemble des produits résultant de la réduction, de quelque manière que ce soit, des sucres et sucres oxydés précités. De manière préférentielle le sucre hydrogéné est choisi dans le groupe comprenant le sorbitol, le mannitol, le xylitol, l'arabitol, l'iditol, le maltitol, le lactitol, le glucosido-1-6 mannitol, l'isomaltitol, le palatinitol, l'érythritol, le maltotriitol, les hydrolysats d'amidon hydrogénés, les dextrines hydrogénées et les mélanges quelconques de ces produits. Par "sucre hydrogéné" au sens de la présente invention, on entend également les dérivés des sucres hydrogénés précités tels que les dérivés boratés comme, par exemple, les sirops boratés BOROSORB^{R} commercialisés par la demanderesse.

De manière avantageuse, le sucre hydrogéné est choisi dans le groupe comprenant le sorbitol, le mannitol, le xylitol, l'arabitol, le maltitol, le lactitol, le maltotriitol, les hydrolysats d'amidon hydrogénés et les mélanges quelconques de ces produits. Les compositions contenant au moins 40 %, en poids (sec/sec) de maltitol ou de lactitol sont, à titre d'exemples, particulièrement performants en association avec des sucres (oxydés). L'adjuvant selon l'invention peut être entièrement constitué par la composition à base de sucre (oxydé) et de sucre hydrogéné décrite ci-avant ou comprendre, outre celle-ci, au moins un adjuvant traditionnel pour liants minéraux.

Des adjuvants traditionnels tels que les amines, notamment la triéthanolamine, les borates, sulfates, phosphates et sels de calcium peuvent être introduits en toutes proportions dans l'adjuvant conforme à l'invention, mais de préférence à raison de 0,1 à 20 %, ce pourcentage étant exprimé en poids sec par rapport au poids sec de la composition à base de sucre (oxydé) et de sucre hydrogéné contenue dans ledit adjuvant. Des pourcentages compris entre 0,5 et 15 %, en particulier entre 1 et 10 %, sont particulièrement avantageux.

Des adjuvants traditionnels tels que les dérivés de naphtalènes sulfonés ou de mélamines sulfonés, les polyacrylates, les lignosulfonates, les polyols autres que les sucres hydrogénés comme le glycérol et les glycols peuvent . être introduits dans l'adjuvant en toutes proportions, de préférence à raison de 1 à 50 %.

La Société Demanderesse a notamment trouvé que l'utilisation concomitante de certains adjuvants usuels permettait l'obtention d'effets de synergie en termes de plasticité et de propriétés mécaniques.

L'adjuvant conforme aux revendications 1 à 8 peut lui-même se présenter sous forme liquide, pâteuse ou solide. Il est tout-à-fait approprié pour être utilisé comme adjuvant pour ciment et ce, avant, pendant et/ou après broyage, comme décrit par exemple au niveau du brevet FR N° 2 744 714 précité, ou adjuvant pour les chaux hydrauliques. Il est également tout-à-fait approprié pour être utilisé comme adjuvant pour bétons, coulis et mortiers, qu'ils soient liquides ou solides.

Le taux d'introduction de l'adjuvant selon l'invention se situe en pratique entre 0,001 et 5 % exprimé en poids sec d'adjuvant par rapport au poids sec total de matière(s) première(s) pour ciment, de ciment, et/ou de chaux contenu dans le liant minéral.

Un autre objet de l'invention concerne un liant minéral selon la revendication 9.

Selon une première variante, ce liant est caractérisé par le fait :
- qu'il est choisi parmi les ciments, les matières premières pour la fabrication des ciments, les chaux hydrauliques et leurs mélanges, et
- qu'il contient de 0,001 à *1,3* % en poids, de préférence de 0,005 à 0,7 % en poids et plus préférentiellement encore de 0.01 à 0,5 % en poids d'un adjuvant tel que revendiqué (dans les revendications 1 à 8) ce pourcentage étant exprimé en sec/sec comme décrit ci-dessus.

Selon une autre variante, le liant est caractérisé par le fait :
- qu'il est choisi parmi les mortiers, coulis et bétons, liquides, pâteux ou solides, et
- qu'il contient de 0,005 à 5 % en poids, de préférence de 0,01 à 2 % en poids et plus préférentiellement encore de 0,02 à 1 % en poids d'un adjuvant tel que revendiqué (dans les revendications 1 à 8) ce pourcentage étant exprimé en sec/sec comme décrit ci-dessus.

L'adjuvant selon l'invention peut être introduit au sein des liants minéraux selon une multitude de variantes. Il peut l'être en totalité lors d'une étape particulière de fabrication, de stockage, d'adjuvantation, d'hydratation, de transport ou de mise en place du liant minéral oc de manière fractionnée lors de plusieurs de ces étapes particulières. Il peut, par exemple, être utilisé, en tout ou partie, lors de le fabrication de liants minéraux pulvérulents, y compris au niveau même des cimenteries, avant, pendant et/ou après broyage ou lors de la préparation de mortiers ou bétons secs et/ou prêts à l'emploi. Il peut également être utilisé, en tout ou partie, lors du transport de lIants minéraux péteux ou liquides, ou de leur fabrication en usine ou sur chantier, et par exemple dans l'eau et/ou les granulats nécessaires à la préparation, notamment dans des enceintes appelées communément "centrales à béton", de mortiers, coulis ou bétons, ou juste avant le coulage de ceux-ci.

La présente invention a donc également pour objet un procédé selon la revendication 6 de préparation d'un liant minéral caractérisé par le fait que l'on ajoute, en une ou plusieurs fois, un adjuvant tel que revendiqué a un liant minéral pulvérulent choisi dans le groupe comprenant les ciments, les matières premières pour la fabrication des ciments, les chaux hydrauliques, les mortiers et bétons secs et/ou prêts à l'emploi et leurs mélanges.

Selon une autre variante, l'invention concerne un procédé selon la revendication 17 de préparation d'un liant minéral caractérisé en ce que ajoute, en une ou plusieurs fois, un adjuvant tel que revendiqué a) à un liant minéral non pulvérulent, en particulier pâteux ou liquide, choisi dans le groupe comprenant les mortiers, coulis et bétons et/ou b) à l'eau et/ou aux granulats nécessaires à la préparation dudit liant: minéral non pulvérulent.

Le concept général de la présente invention repose sur l'utilisation conjointe d'un sucre ou d'un sucre oxydé et d'un sucre hydrogéné, pour l'adjuvantation de liants minéraux, notamment en vue d'en améliorer la plasticité et/ou les propriétés mécaniques.

Cette utilisation peut notamment concerner l'industrie des plâtres.

La présente invention va être décrite de façon encore plus détaillée à l'aide des exemples qui suivent et qui ne sont, aucunement limitatifs.

Dans tous les exemples qui suivent, les mesures. de l'étalement (en mm) et de résistances mécaniques (en 14Pa) à 17 heures, 24 heures, 48 heures, 14 jours ou 28 jours, ont été faites selon la norme CEN 196-01. Dans ces exemples, les abréviations suivantes sont utilisées :
SGO : sirop de glucose (DE . 37)', oxydé selon le brevet EP 232.202, SMA : sirop de maltitol. contenant en poids sur sec, 30 % de sorbitol et 45 % de maltitol, GSL : gluconate de sodium liquide, MALP : maltitol pur cristallisé MALTISORE^{R} P200 commercialisé par la Demanderesse, LYCASIN^{R} : sirop de maltitol commercialisé par la demanderesse contenant en poids sur sec, 3 % de sorbitol et 52 % de maltitol, POLYSORB^{R} : sirop de glucose hydrogéné POLYSORB^{R} 70/12/12 commercialisé par la Demanderesse contenant en poids sur sec, 12 % de sorbitol et 15 % de maltitol, ROCLYS^{R} : sirop de glucose ROCLYS^{R} B 3879 de DE d'environ 38, commercialisé par la demanderesse, MALTISORB^{R} : sirop de maltitol MALTISORB^{R} 70/75 commercialisé par la Demanderesse contenant en poids sur sec, 75 % de maltitol et 3 % de sorbitol, SG sirop de glucose (DE 42) contenant en poids sur sec, 18 % de glucose et 14 % de maltose, SGH1 : sirop de glucose hydrogéné contenant en poids sur sec, 21 % de sorbitol et 13 % de maltitol, SGH2 : idem SGH1 mais contenant 11 % de sorbitol et 10 % de maltitol, XYLP : xylitol pur cristallisé XYLISORB^{R} commercialisé par la demanderesse, ARAP : arabitol cristallisé, LACP : lactitol monohydrate cristallisé, LSB : lignosulfonates de sodium bruts, LSP : lignosulfonates de sodium désucrés, PAC : polyacrylates, TEA : triéthanolamine, PTS : phosphate trisodique, BOR : borax.

### EXEMPLE 1

On prépare des mortiers témoins T1a et T1b en mélangeant 450 g de ciment CPA 55 HP, ce ciment provenant soit d'un premier lot ("lot a") soit d'un second lot ("lot b"), avec 1350 g de sable normalisé et 225 g d'eau. On mesure l'étalement E en mm, le début de prise DP et la fin de prise FP.en heures et minutes ainsi que les résistances mécaniques à 17 heures, 48 heures et 28 jours en MPa. Les résultats obtenus sont les suivants :

| **MORTIER TEMOIN** | **T1a** | **T2b** |
|---|---|---|
| ETALEMENT | 213,5 | 218,5 |
| DEBUT PRISE | 3H35 | 3H40 |
| FIN PRISE | 4H50 | 5H55 |
| RESISTANCE 17H | 10,8 | 11,9 |
| RESISTANCE 48H | 27 | 26,6 |
| RESISTANCE 28J | 48,4 | 52,2 |

### EXEMPLE 2

On prépare des compositions de mortier T1a selon l'EXEMPLE 1 ci-dessus dans lesquelles on ajoute 0,3 %, exprimé en poids sec/poids sec du ciment, de chacun des produits suivants : SGO, GSL, ROCLYS^{R}, MALP, MALTISORB^{R}, LYCASIN^{R}, SMA, POLYSORB^{R}, XYLP, ARAP, LSB, LSP et PAC. Les résultats obtenus sont repris ci-après :

| **Adjuvant** **(0,3 %)** | **E** **(mm)** | **R17H** **(MPa)** | **R48H** **(MPa)** | **R28J** **(MPa)** |
|---|---|---|---|---|
| SGO | 277 | 1,1 | 24 | 52,5 |
| GSL | 269,5 | 2,0 | 5 | 52,5 |
| ROCLYS^{R} | 221,5 | 0,4 | 16,4 | 54,5 |
| MALP | 198,5 | 8,1 | 27,3 | 52,5 |
| MALTISORB^{R} | 188,5 | 7,2 | 27,6 | 55 |
| LYCASIN^{R} | 206 | 7,7 | 27,1 | 51 |
| SMA | 196,5 | 7,4 | 27,3 | 51,5 |
| POLYSORB^{R} | 221,5 | 5,7 | 28,4 | 50,5 |
| XYLP | 205 | 7,9 | ND* | 56 |
| ARAP | 217 | 8,0 | ND* | 53 |
| LSB | 227,5 | 6 | 14,6 | 26,7 |
| LSP | 228,5 | 10,2 | 22,2 | 52 |
| PAC | 259,5 | 9,9 | 19,8 | 55, 5 |

| | | | | |
|---|---|---|---|---|
| ND* = Non Déterminé | | | | |

Ces résultats montrent globalement que :
- les sucres (ROCLYS^{R}) et sucres oxydés (SGO, GSL) sont extrêmement plastifiants et retardateurs de prise. Ils ne permettent pas d'obtenir, au jeune âge, une résistance suffisante pour décoffrer. Ils confèrent des résistances à 48 heures, inférieures au témoin T1a non adjuvanté (27 MPa).
- les sucres hydrogénés (MALP, MALTISORB^{R}, LYCASIN^{R}, SMA, POLYSORB^{R}, XYLP at ARAP) sont beaucoup moins plastifiants et retardateurs de prise que les sucres et sucres oxydés. Ils permettent d'obtenir, au jeune âge, une résistance suffisante pour décoffrer (R17H = 5 MPa). En outre, ils confèrent des résistances à 48 heures égales ou supérieures à celles du témoin T1a non adjuvanté.
- les lignosulfonates bruts (LSB) et désucrés (LSP) sont plus plastifiants que les sucres hydrogénés et moins que les sucres oxydés. Leurs performances à 17 heures et 48 heures sont inférieures à celles du témoin T1a non adjuvanté.
- à l'exception du produit LSB, l'ensemble des additifs testés confèrent des résistances à 28 jours supérieures à celle du témoin T1a non adjuvanté (48,4 MPa), à savoir se situant environ à 50 et 56 MPa.

### EXEMPLE 3

On prépare des mélanges d'un sucre oxydé (GSL) et d'un sucre hydrogéné (MALP) en faisant varier le ratio pondéral GSL/MALP (en sec/sec) du ratio 100 %/0 % au ratio 0 %/100 %. On ajoute 0,3 % de ces différents mélanges à des compositions de mortier T1a. Les résultats obtenus sont repris ci-après :

| **Adjuvant** **(0,3 %)** | **E** **(mm)** | **R17H** **(MPa)** | **R48H** **(MPa)** | **R28J** **(MPa)** |
|---|---|---|---|---|
| GSL/MALP (100/0) | 269,5 | 0 | 5 | 52,5 |
| GSL/MALP (50/50) | 266 | 1,6 | 20,5 | 54,0 |
| GSL/MALP (25/75) | 281 | 4,8 | 24,5 | 56,5 |
| GSL/MALP (10/90) | 269 | 7,5 | 29,7 | 63,0 |
| GSL/MALP (0/100) | 198,5 | 8,1 | 27,3 | 52,5 |

Ces résultats montrent que pour les mélanges testés, on assiste à des effets de synergie à la fois en termes de plasticité et, globalement, de résistance mécanique. Les mélanges présentant des ratios pondéraux GSL/MALP de 25/75 et 10/90 (sec/sec) se révèlent être des adjuvants particulièrement avantageux puisque permettant, entre autres, d'obtenir des résistances à 28 jours supérieures à 56 MPa, pouvant dépasser 60 MPa.

Les mêmes constats généraux ont été faits en remplaçant a) le produit GSL par le sucre oxydé SGO et b) le produit MALP par le sucre hydrogéné POLYSORB^{R}...

La Demanderesse a observé que les effets de synergie étaient également obtenus et ce, que ce soit pour un ajout de 0,3 % ou de 0,15.%, en associant un sucre oxydé comme le produit GSL à d'autres sucres hydrogénés tels que les produits XYLP (xylitol cristallisé), LACP (lactitol cristallisé) ou MANP (mannitol cristallisé).

### EXEMPLE 4

Dans des compositions de mortier T1a, on ajoute 0,3 % de chacun des mélanges suivants :
- MALP/PAC avec un ratio pondéral sucre hydrogéné/polyacrylates de 50/50 en sec/sec,
- POLYSORB^{R}/PAC avec un ratio pondéral sucre hydrogéné/polyacrylates de 50/50 également.

Les résultats obtenus sont repris ci-après et comparés à ceux enregistrés avec 0,3 %, respectivement, de chacun de ces sucres hydrogénés et de polyacrylates.

| **Adjuvant** **(0,3 %)** | **E** **(mm)** | **R17H** **(MPa)** | **R48H** **(MPa)** | **R28J** **(MPa)** |
|---|---|---|---|---|
| MALP | 198,5 | 8,1 | 27,3 | 32,5 |
| POLYSORB^{R} | 221,5 | 5,7 | 28,4 | 50,5 |
| PAC | 259,5 | 9,9 | 19,8 | 55,5 |
| MALP/PAC (50/50) | 224,5 | 8,2 | 17 | 40,5 |
| POLYSORB^{R}/PAC (50/50) | 301 | 4,8 | 20,6 | 37 |

Ces résultats montrent qu'il n'existe globalement pas d'effet de synergie entre des sucres hydrogénés et des produits synthétiques polycarboxylés tels que les polyacrylates. Au contraire, les associations entre sucre hydrogéné et polyacrylates génèrent des résistances mécaniques qui sont en deça de celles que l'on aurait pu prévoir en tenant compte des quantités respectives de sucre hydrogéné et de polyacrylates mis en oeuvre. De manière particulièrement surprenante, de telles associations confèrent au mortier testé des résistances à 28 jours particulièrement faibles (de l'ordre de 40 MPa), très significativement diminuées en regard de celles observées pour les produits testés isolément (de l'ordre de 50-55 MPa). L'absence de synergie a été vérifiée avec mise en oeuvre de 0,15 % de tels mélanges.

### EXEMPLE 5

Dans des compositions de mortier Tlb, on ajoute 0,3 % de chacun des mélanges suivants selon l'invention :
- un mélange binaire du sucre oxydé GSL et du sucre hydrogéné SMA selon le ratio pondéral GSL/SMA de 5/95,
- un mélange ternaire contenant, en poids (sec/sec) 95 % d'un mélange binaire GSL/SMA, et 5 % de triéthanolamine (TEA),
- deux mélanges ternaires identiques à celui décrit ci-avant si ce n'est que l'on remplace la TEA par soit du phosphate trisodique (PTS), soit du borax (BOR),

Les résultats obtenus sont repris ci-après.

| **Adjuvant** **(0,3 %)** | **E** **(mm)** | **R48H** **(MPa)** |
|---|---|---|
| GSL/SMA (5/95) | 281,5 | 23 |
| 95 % GSL/SMA (5/95) + 5 % TEA | 283,5 | 24,8 |
| 95 % GSL/SMA (5/95) + 5 % PTS | 283,5 | 26,0 |
| 95 % GSL/SMA (5/95) + 5 % borax | 282,5 | 24,8 |

Ces résultats montrent que la mise en oeuvre d'une petite quantité d'adjuvant traditionnel au sein de l'adjuvant selon l'invention (5 % en sec/sec) permet encore d'améliorer plasticité et résistance à 48 heures.

### EXEMPLE 6

Dans le cadre de cet exemple, on étudie l'effet de l'incorporation d'un adjuvant selon l'invention dans un ciment non hydraté, porté et maintenu à température élevée. Plus précisément, on chauffe du ciment CPA 52,5 HP pendant 2 heures à 100°C environ puis on y incorpore, par mélange dans un dispositif de type ROBOT-COUPE, 0,1 % en poids (sec/sec) de GSL, de SMA ou d'un adjuvant selon l'invention constitué par un mélange GSL/SMA (ratio pondéral de 5/95). On maintient ensuite le ciment adjuvanté ainsi obtenu pendant une heure à 100°C environ. Après refroidissement, on réalise un mortier à partir de ce ciment adjuvanté et ce, selon les modalités de l'EXEMPLE 1. Les résultats obtenus sont repris ci-après.

| **Adjuvant** **(0,1 %)** | **DP** **(H mn)** | **R17H** **(MPa)** | **R14J** **(MPa)** |
|---|---|---|---|
| SANS | 4H00 | 7,7 | 51,0 |
| GSL | 6H30 | 5,1 | 49,0 |
| SMA | 6H15 | 7,3 | 50,0 |
| GSL/SMA (5/95) | 5H50 | 7,5 | 54,0 |

Ces résultats montrent que, de façon surprenante, le mélange sucre oxydé/sucre hydrogéné testé est moins retardateur que chacun des composants dudit mélange (GSL et SMA). Ce mélange procure, en outre, des effets de synergie inattendus en termes de résistance et ce, tant au jeune âge qu'après 14 jours. Cet exemple montre qu'une composition sucre oxydé/sucre hydrogéné objet de l'invention peut également être avantageusement utilisée comme adjuvant au niveau même d'un ciment.

### EXEMPLE 7

On prépare un mortier témoin T1c de la même façon que les mortiers T1a et T1b. On y incorpore 0,3 % de chacun des produits suivants : SG, SGH1, SGH2, et des mélanges SG/SGH1 et SG/SGH2 en faisant varier les ratios pondéraux entre sucre et sucre hydrogéné. Les résultats obtenus sont repris ci-après.

| **Adjuvant** **(0,3 %)** | **E** **(mm)** | **DP** **(H mn)** | **FP** **(H mn)** | **R24H** **(MPa)** |
|---|---|---|---|---|
| SANS | 205 | 2H40 | 5H25 | 14,7 |
| SG | 234 | 11H40 | 17H40 | 0,5 |
| SGH1 | 245 | 6H20 | 9H35 | 11,9 |
| SG/SGH1 (50/50) | 251,5 | 7H45 | 13H15 | 7,4 |
| SG/SGH1 (25/75) | 250 | 6H00 | 10H00 | 10,9 |
| SGH2 | 251,5 | 6H30 | 8H30 | 11,5 |
| SG/SGH2 (50/50) | 276,5 | 7H15 | 15H00 | 6,1 |
| SG/SGH2 (25/75) | 267 | 7H40 | 9H55 | 8,8 |

Ces résultats montrent que le sucre SG est plastifiant mais extrêmement retardateur de prise. Il ne permet pas d'obtenir, au jeune âge, une résistance suffisante pour décoffrer. Les sucres hydrogénés SGH1 et SGH2 sont beaucoup moins retardateurs de prise. Ils permettent d'obtenir, au jeune âge, des résistances suffisantes pour décoffrer (11-12 MPa). De façon remarquable, les mélanges sucre/sucre hydrogéné testés procurent des effets de synergie et ce, tant en termes de plasticité que de résistance mécanique.

### EXEMPLE 8

Une composition X conforme à l'invention présentant une matière sèche de 50% environ et contenant, sur sec, 75% de gluconate de sodium et 25% de maltitol MALTISORB^{R} P200, est utilisée dans la préparation d'un plâtre manuel selon la formulation suivante :

| | **kg en sec** |
|---|---|
| plâtre (75% semi-hydraté - 25% surcuit) | 998,8 |
| amidon épaississant TEXALYS^{R} V 213 | 0,4 |
| chaux | 0,3 |
| composition X selon l'invention | 0,5 |

Une formulation de plâtre témoin est préparée de la même façon si ce n'est que l'on n'y a pas introduit de composition X.

Il apparaît que la composition X permet :
1) de retarder suffisamment la prise du plâtre pour en permettre une mise en place aisée, et
2) d'obtenir, après séchage du plâtre, un enduit présentant un aspect lisse sans retrait ni craquelures.

Cet exemple montre que les compositions selon l'invention peuvent être avantageusement utilisées dans l'industrie des plâtres, en raison de leurs bonnes propriétés complexantes et de régulation de déshydratation.

## Revendications

1. Utilisation comme adjuvant pour liants minéraux d'une composition contenant :
- de 1 à 99 % d'un sucre ou d'un sucre oxydé, et
- de 99 à 1 % d'un sucre hydrogéné,
ces pourcentages étant exprimés en poids sec par rapport au poids sec total de sucre ou sucre oxydé et de sucre hydrogéné contenu dans ladite composition.

2. Utilisation selon la revendication 1, **caractérisée en ce que** la composition contient :
- de 3 à 75 % d'un sucre ou d'un sucre oxydé, et
- de 97 à 25 % d'un sucre hydrogéné.

3. Utilisation selon la revendication 2, **caractérisée en ce que** la composition contient :
- de 5 à 60 % d'un sucre ou d'un sucre oxydé, et
- de 95 à 40 % d'un sucre hydrogéné.

4. Utilisation selon l'une quelconque des revendications 1 à 3, **caractérisée en ce que** :
- le sucre est choisi parmi les hydrolysats d'amidon, et/ou
- le sucre oxydé est choisi dans le groupe comprenant l'acide gluconique, l'acide glucarique, l'acide xylonique, l'acide arabinonique, l'acide lactobionique, l'acide maltobionique, l'acide érythorbique, les hydrolysats d'amidon oxydés, leurs sels et les mélanges quelconques d'au moins deux quelconques de ces produits, et/ou
- le sucre hydrogéné contenu dans ladite composition est choisi dans le groupe comprenant le sorbitol, le mannitol, le xylitol, l'arabitol, le maltitol, le lactitol, le maltotriitol, les hydrolysats d'amidon hydrogénés et les mélanges quelconques d'au moins deux quelconques de ces produits

5. Utilisation selon l'une quelconque des revendications 1 à 4, **caractérisée en ce que** l'adjuvant pour liants minéraux comprend également au moins un produit choisi parmi les phosphates, les sulfates, les borates, les amines, notamment la triéthanolamine, les sels de calcium, les dérivés de mélamines sulfonées ou de naphtalènes sulfonés, les polyacrylates, les polyols autres que les sucres hydrogénés, notamment le glycérol et les glycols, les lignosulfonates et les mélanges quelconques d'au moins deux quelconques desdits produits.

6. Utilisation selon la revendication 5, **caractérisée en ce que** l'adjuvant pour liants minéraux comprend un produit choisi parmi les phosphates, les borates, les amines et leurs mélanges, le rapport pondéral entre ledit produit et la composition, exprimé en poids sec de produit sur le poids sec de la composition, étant compris entre 0,1 et 20 %.

7. Utilisation selon la revendication 6, **caractérisée en ce que** ledit rapport pondéral est compris entre 0,5 et 15 %.

8. Utilisation selon la revendication 7, **caractérisée en ce que** ledit rapport pondéral est compris entre 1 et 10 %.

9. Liant minéral **caractérisé en ce qu'**il contient de 0,001 à 5 % d'un adjuvant selon l'une quelconque des revendications 1 à 8, ce pourcentage étant exprimé en poids sec dudit adjuvant par rapport au poids sec total de matière(s) première(s) pour ciment avant broyage, de ciment et/ou de chaux contenu dans ledit liant minéral.

10. Liant minéral selon la revendication 9 **caractérisé en ce qu'**il est choisi parmi les ciments, les matières premières pour la fabrication des ciments, les chaux hydrauliques et leurs mélanges et **en ce qu'**il contient de 0,001 à 1,3 %, d'un adjuvant selon l'une quelconque des revendications 1 à 8.

11. Liant minéral selon la revendication 10 **caractérisé en ce qu'**il contient de 0,005 à 0,7 % d'un adjuvant selon l'une quelconque des revendications 1 à 8.

12. Liant minéral selon la revendication 11 **caractérisé en ce qu'**il contient de 0,01 à 0,5 % d'un adjuvant selon quelconque des revendications 1 à 8.

13. Liant minéral selon la revendication 9 **caractérisé en ce qu'**il est choisi parmi les mortiers, coulis et bétons, liquides, pâteux ou solides et **en ce qu'**il contient de 0,005 à 5 % d'un adjuvant selon l'une quelconque des revendications 1 à 8.

14. Liant minéral selon la revendication 13 **caractérisé en ce qu'**il contient de 0,01 à 2 % d'un adjuvant selon l'une quelconque des revendications 1 à 8.

15. Liant minéral selon la revendication 14 **caractérisé en ce qu'**il contient de 0,02 à 1 % d'un adjuvant selon l'une quelconque des revendications 1 à 8.

16. Procédé de préparation d'un liant minéral **caractérisé en ce que** l'on ajoute, en une ou plusieurs fois, un adjuvant selon l'une quelconque des revendications 1 à 8 à un liant minéral pulvérulent choisi dans le groupe comprenant les ciments, les matières premières pour la fabrication des ciments, les chaux hydrauliques, les mortiers et les bétons secs et/ou prêts à l'emploi et leurs mélanges.

17. Procédé de préparation d'un liant minéral **caractérisé en ce que** l'on ajoute, en une ou plusieurs fois, un adjuvant selon l'une quelconque des revendications 1 à 8 a) à un liant minéral non pulvérulent, en particulier pâteux ou liquide, choisi dans le groupe comprenant les mortiers, coulis et bétons et/ou b) à l'eau et/ou aux granulats nécessaires à la préparation dudit liant minéral non pulvérulent.

18. Utilisation conjointe d'un sucre ou d'un sucre oxydé et d'un sucre hydrogéné pour l'adjuvantation de liants minéraux, notamment en vue d'en améliorer la plasticité et/ou les propriétés mécaniques.

## Patentansprüche

1. Verwendung einer Zusammensetzung als Zusatzstoff für anorganische Bindemittel, enthaltend:
- 1 bis 99% eines Zuckers oder eines oxidierten Zuckers,
und
- 99 bis 1% eines hydrogenierten Zuckers,
wobei diese Prozentsätze in Trockengewicht in Bezug auf das Gesamttrockengewicht von Zucker oder oxidiertem Zucker und hydrogeniertem Zucker, der in der Zusammensetzung enthalten ist, ausgedrückt sind.

2. Verwendung nach Anspruch 1, **dadurch gekennzeichnet, dass** die Zusammensetzung Folgendes enthält:
- 3 bis 75% eines Zuckers oder eines oxidierten Zuckers,
und
- 97 bis 25% eines hydrogenierten Zuckers.

3. Verwendung nach Anspruch 2, **dadurch gekennzeichnet, dass** die Zusammensetzung Folgendes enthält:
- 5 bis 60% eines Zuckers oder eines oxidierten Zuckers,
und
- 95 bis 40% eines hydrogenierten Zuckers.

4. Verwendung nach einem der Ansprüche 1 bis 3, **dadurch gekennzeichnet, dass**:
- der Zucker unter den Stärkehydrolysaten ausgewählt wird, und/oder
- der oxidierte Zucker aus der Gruppe umfassend die Gluconsäure, die Glucarsäure, die Xylonsäure, die Arabinonsäure, die Lactobionsäure, die Maltobionsäure, die Erythorbinsäure, die oxidierten Stärkehydrolysate, ihre Salze und die beliebigen Mischungen mindestens zweier dieser Produkte ausgewählt wird und/oder
- der hydrogenierte Zucker, der in der Zusammensetzung enthalten ist, aus der Gruppe umfassend Sorbitol, Mannitol, Xylitol, Arabitol, Maltitol, Lactitol, Maltotriitol, die hydrogenierten Stärkehydrolysate und die beliebigen Mischungen mindestens zweier dieser Produkte ausgewählt wird.

5. Verwendung nach einem der Ansprüche 1 bis 4, **dadurch gekennzeichnet, dass** der Zusatzstoff für anorganische Bindemittel auch mindestens ein Produkt umfasst, das unter den Phosphaten, Sulfaten, Boraten, Aminen, insbesondere dem Triethanolamin, den Calciumsalzen, den Derivaten von sulfurierten Melaminen oder von sulfurierten Naphthalinen, den Polyacrylaten, den Polyolen außer den hydrogenierten Zuckern, insbesondere dem Glycerol und den Glycolen, den Lignosulfonaten und den beliebigen Mischungen mindestens zweier dieser Produkte ausgewählt wird.

6. Verwendung nach Anspruch 5, **dadurch gekennzeichnet, dass** der Zusatzstoff für anorganische Bindemittel ein Produkt umfasst, das unter den Phosphaten, den Boraten, den Aminen und ihren Mischungen ausgewählt wird, wobei das Gewichtsverhältnis zwischen dem Produkt und der Zusammensetzung, ausgedrückt in Trockengewicht des Produktes zum Trockengewicht der Zusammensetzung zwischen 0,1 und 20% liegt.

7. Verwendung nach Anspruch 6, **dadurch gekennzeichnet, dass** das Gewichtsverhältnis zwischen 0,5 und 15% liegt.

8. Verwendung nach Anspruch 7, **dadurch gekennzeichnet, dass** das Gewichtsverhältnis zwischen 1 und 10% liegt.

9. Anorganisches Bindemittel, **dadurch gekennzeichnet, dass** es 0,001 bis 5% eines Zusatzstoffes nach einem der Ansprüche 1 bis 8 enthält, wobei dieser Prozentsatz in Trockengewicht des Zusatzstoffes in Bezug auf das Gesamtrohstofftrockengewicht für Zement vor der Zerkleinerung, Zement und/oder Kalk, der in dem anorganischen Bindemittel enthalten ist, ausgedrückt ist.

10. Anorganisches Bindemittel nach Anspruch 9, **dadurch gekennzeichnet, dass** es unter den Zementen, den Rohstoffen zur Herstellung der Zemente, den Wasserkalken und ihren Mischungen ausgewählt wird, und dass es 0,001 bis 1,3% eines Zusatzstoffes nach einem der Ansprüche 1 bis 8 enthält.

11. Anorganisches Bindemittel nach Anspruch 10, **dadurch gekennzeichnet, dass** es 0,005 bis 0,7% eines Zusatzstoffes nach einem der Ansprüche 1 bis 8 enthält.

12. Anorganisches Bindemittel nach Anspruch 11, **dadurch gekennzeichnet, dass** es 0,01 bis 0,5% eines Zusatzstoffes nach einem der Ansprüche 1 bis 8 enthält.

13. Anorganisches Bindemittel nach Anspruch 9, **dadurch gekennzeichnet, dass** es unter den Mörteln, Verbindungsmassen und Betonen, die flüssig, pastenartig oder fest sind, ausgewählt wird und dass es 0,005 bis 5% eines Zusatzstoffes nach einem der Ansprüche 1 bis 8 enthält.

14. Anorganisches Bindemittel nach Anspruch 13, **dadurch gekennzeichnet, dass** es 0,01 bis 2% eines Zusatzstoffes nach einem der Ansprüche 1 bis 8 enthält.

15. Anorganisches Bindemittel nach Anspruch 14, **dadurch gekennzeichnet, dass** es 0,02 bis 1% eines Zusatzstoffes nach einem der Ansprüche 1 bis 8 enthält.

16. Verfahren zur Herstellung eines anorganischen Bindemittels, **dadurch gekennzeichnet, dass** man einen Zusatzstoff nach einem der Ansprüche 1 bis 8 einmal oder mehrmals zu einem pulverförmigen anorganischen Bindemittel hinzufügt, das aus der Gruppe umfassend die Zemente, die Rohstoffe zur Herstellung der Zemente, die Wasserkalke, die Mörtel und die Trockenbetone und/oder verwendungsfertigen Betone und ihre Mischungen ausgewählt wird.

17. Verfahren zur Herstellung eines anorganischen Bindemittels, **dadurch gekennzeichnet, dass** man einen Zusatzstoff nach einem der Ansprüche 1 bis 8 einmal oder mehrmals a) zu einem nicht pulverförmigen, insbesondere pastenförmigen oder flüssigen anorganischen Bindemittel, das aus der Gruppe umfassend die Mörtel, Verbindungsmassen und Betone ausgewählt wird, und/oder b) zu Wasser und/oder für die Herstellung des nicht pulverförmigen anorganischen Bindemittels erforderlichen Granulaten hinzufügt.

18. Gemeinsame Verwendung eines Zuckers oder eines oxidierten Zuckers und eines hydrogenierten Zuckers für Hinzufügung zu anorganischen Bindemitteln, insbesondere um deren Plastizität und/oder mechanische Eigenschaften zu verbessern.

## Claims

1. Use as admixture for mineral binders, of a composition containing:
- 1 to 99% of a sugar or an oxidised sugar, and
- 99 to 1% of a hydrogenated sugar,
these percentages being expressed in dry weight with respect to the total dry weight of sugar or oxidised sugar and hydrogenated sugar contained in the said composition.

2. Use according to claim 1, **characterised in that** the composition contains :
- 3 to 75% of a sugar or an oxidised sugar, and
- 97 to 25% of a hydrogenated sugar.

3. Use according to claim 2, **characterized in that** the composition contains :
- 5 to 60% of a sugar or an oxidised sugar, and
- 95 to 40 % of a hydrogenated sugar.

4. Use according to anyone of claims 1 to 3, **characterized in that** :
- the sugar is chosen from the starch hydrolysates, and/or
- the oxidised sugar is chosen from the group comprising gluconic acid, glucaric acid, xylonic acid, arabinonic acid, lactobionic acid, maltobionic acid, erythorbic acid, oxidised starch hydrolysates, salts thereof and any mixtures of at least any two of said products, and/or
- the hydrogenated sugar contained in the said composition is chosen from the group comprising sorbitol, mannitol, xylitol, arabitol, maltitol, lactitol, maltotriitol, hydrogenated starch hydrolysates and any mixtures of at least any two of said products.

5. Use according to anyone of claims 1 to 4, **characterized in that** the admixture for mineral binders also comprises at least one product chosen from phosphates, sulphates, borates, amines, particularly triethanolamine, calcium salts, derivatives of sulphonated melamines or sulphonated naphthalenes, polyacrylates, polyols other than hydrogenated sugars, particularly glycerol and glycols, lignosulphonates and any mixtures of at least any two of the said products.

6. Use according to claim 5, **characterized in that** the admixture for mineral binders comprises a product chosen from phosphates, borates, amines and mixtures thereof, the weight ratio between the said product and the composition, expressed in dry weight of product with respect to the dry weight of the composition, being between 0.1 and 20 %.

7. Use according to claim 6, **characterized in that** said weight ratio is between 0.5 and 15%.

8. Use according to claim 7, **characterized in that** said weight ratio is between 1 and 10%.

9. A mineral binder, **characterised in that** it contains 0.001 to 5% of an admixture according to anyone of claims 1 to 8, this percentage being expressed in dry weight of the said admixture with respect to the total dry weight of raw material(s) for cement before grinding, cement, and/or lime contained in the said mineral binder.

10. A mineral binder according to claim 9, **characterized in that** it is chosen from cements, raw materials for the production of cements, hydraulic limes and mixtures thereof, and **in that** it contains 0.001 to 1.3% of an admixture according to anyone of claims 1 to 8.

11. A mineral binder according to claim 10, **characterized in that** it contains 0.005 to 0.7 % of an admixture according to anyone of claims 1 to 8.

12. A mineral binder according to claim 11, **characterized in that** it contains 0.01 to 0.5 % of an admixture according to anyone of claims 1 to 8.

13. A mineral binder according to claim 9, **characterized in that** it is chosen from liquid, pasty or solid mortars, slurries and concretes, and, **in that** it contains 0.005 to 5% of an admixture according to anyone of claims 1 to 8.

14. A mineral binder according to claim 13, **characterized in that** it contains 0.01 to 2% of an admixture according to anyone of claims 1 to 8.

15. A mineral binder according to claim 14, **characterized in that** it contains 0.02 to 1% of an admixture according to anyone of claims 1 to 8.

16. A process for the preparation of a mineral binder, **characterized in that** an admixture according to anyone of claims 1 to 8 is added in one or more operations to a powdery mineral binder chosen from the group comprising cements, raw materials for the production of cements, hydraulic limes, dry and/or ready-mixed mortars and concretes and mixtures thereof.

17. A process for the preparation of a mineral binder, **characterized in that** an admixture according to anyone of claims 1 to 8 is added in one or more operations a) to a non-powdery mineral binder, particularly in the paste or liquid form, chosen from the group comprising mortars, slurries and concretes and/or b) to the water and/or aggregates required for the preparation of the said non-powdery mineral binder.

18. Joint use of a sugar or an oxidised sugar and a hydrogenated sugar for admixing mineral binders, in particular for improving the plasticity and/or the mechanical properties thereof.
